# EUROPÄISCHE PATENTSCHRIFT

(11) **EP 0 565 543 B1**
(45) Veröffentlichungstag und Bekanntmachung des Hinweises auf die Patenterteilung: **13.07.1994**
(21) Anmeldenummer: 92901278.9
(22) Anmeldetag: 06.01.1992
(51) Int. Cl.: F16D 1/04

(54) **KUPPLUNGSELEMENT ZUM KRAFTSCHLÜSSIGEN VERBINDEN EINES ÄUSSEREN BAUTEILS MIT EINER WELLE**
COUPLING ELEMENT FOR FRICTIONALLY CONNECTING AN EXTERNAL COMPONENT TO A SHAFT
ELEMENT D'ACCOUPLEMENT POUR L'ASSEMBLAGE PAR LIAISON DE FORCE D'UN ELEMENT EXTERIEUR AVEC UN ARBRE

(30) Priorität: 10.01.1991 DE 9100239 U; 12.02.1991 DE 4104217
(43) Veröffentlichungstag der Anmeldung: 20.10.1993
(73) Patentinhaber: Müllenberg, Ralph, D-41516 Grevenbroich (DE)
(72) Erfinder: Müllenberg, Ralph, D-41516 Grevenbroich (DE)
(74) Vertreter: Palgen, Peter, Dr. Dipl.-Phys.
(86) Internationale Anmeldenummer: DE9200003
(87) Internationale Veröffentlichungsnummer: WO9212355

(56) Entgegenhaltungen:
- EP-A- 0 171 156
- DE-A- 2 852 018
- DE-A- 2 904 003
- DE-A- 3 900 797

## Beschreibung

Kupplungselemente zum kraftschlüssigen Verbinden eines äußeren Bauteils mit einer Welle sind in vielfältigen Ausführungsformen bekannt.

Aus dem DE-GM 18 95 907 geht ein solches Kupplungselement hervor, welches zum Verbinden zweier fluchtend aneinanderstoßender Wellenenden gleichen Durchmessers dient. Diese Stoßstelle wird von einem innen zylindrischen, auf die Wellenenden passenden Büchsenteil überbrückt, der an einer Stelle längsgeschliczt ist und axial hintereinander auf dem Außenumfang ein Gewinde und eine Konusfläche aufweist, deren Wandstärke von dem Gewinde hinweg zunimmt. Auf der Konusfläcne sitzt ein ungeschlitzter Konusring, der durch einen auf dem Gewindeteil aufgeschraubten Gewindering auf die Konusfläche hinaufgedrückt wird, die Ringzugspannungen aufnimmt und den Büchsenteil unter radialer Zusammendrückung kraftschlüssig mit den beiden Wellenenden verbindet.

Aus der CH-PS 265 280 geht ein Kupplungselement hervor, welches zum Kuppeln eines Verbindungsflansches mit der Welle dient. Es ist wiederum ein Büchsenteil mit äußerer Konusfläche und axial anschließendem Gewinde vorhanden. Ein Gewindering zieht den Verbindungsflansch auf die Konusfläche hinauf.

Bei einem der Kupplungselemente nach der FR-PS 13 61 776 ist der Büchsenteil als Doppelkonusring ausgebildet, dessen größte Wandstärke in der Mitte liegt und der die Stoßstelle zwischen zwei fluchtenden, gleichen Durchmesser aufweisenden Wellenenden überbrückt. Auf den beiden äußeren Konusflächen sitzen zwei ungeschlitzte äußere Konusringe, die durch über den Umfang verteilte einzelne Schrauben gegeneinandergezogen werden und dabei den Doppelkonusring radial auf den Wellenden festklemmen. Bei einer anderen Ausführungsform ist nur ein einfacher Konusring vorhanden, mit welchem ein radial ausladendes äußeres Bauteil einstückig verbunden ist. Der äußere Konusring ist durch eine Anzahl über den Umfang verteilter Schrauben, die in das äußere Bauteil eingreifen, auf die Konusfläche des Büchsenteils aufziehbar.

Eine verwandte Ausführungsform ist Gegenstand der DE-OS 12 94 751. Das äußere Bauteil hat hier einen zylindrischen axialen Ansatz, auf welchem ein dünnwandiger, als Doppelkonusring ausgebildter Stauchring angeordnet ist, auf dessen Konusflächen zwei ungeschlitzte Konusringe sitzen, die durch über den Umfang verteilte Schrauben gegeneinandergezogen werden und den Stauchring und den zylindrischen Ansatz auf der Welle festklemmen.

Allen geschilderten Ausführungsformen ist die Anwendung von Gewinden neben Konusflächen gemeinsam, die die zur kraftschlüssigen Verspannung mittels der Konuselemente notwendige axiale Verlagerung herbeiführen. Die Notwendigkeit des Vorhandenseins von Gewinden außer Konusflächen steigert nicht nur den baulichen Aufwand, sondern erschwert auch die Montage, weil große Drehwege zurückgelegt werden müssen, und dies bei den Ausführungsformen mit den über den Umfang verteilten Schrauben sogar in einer ganzen Anzahl von Fällen, wobei die Probleme mit dem Schiefziehen hinzukommen.

Der Erfindung liegt die Aufgabe zugrunde, ein Kupplungselement zum kraftschlüssigen Verbinden eines äußeren Bauteils mit einer Welle anzugeben, welches einfacher gestaltet und einfacher zu betätigen ist.

Diese Aufgabe wird durch die in Anspruch 1 wiedergegebene Erfindung gelöst.

Der Spannring wird beim Festsetzen des Kupplungselements auf der Welle gegenüber dem Büchsenteil verdreht, wobei die Spiralflächen aufeinander gleiten und durch die Steigung eine radiale Zusammendrückung des Büchsenteils und eine kraftschlüssige Verbindung desselben mit der Welle stattfindet. Die bei geeigneten Toleranzen notwendige Verdrehung des Spannrings ist nur gering und beträgt beispielsweise maximal etwa 45°, d.h. es bedarf nur eines einzelnen Hubes an einem an dem Spannring angreifenden Drehwerkzeug, um das Kupplungselement betriebsbereit festzusetzen, nicht aber mehrerer Umdrehungen oder gar mehrerer Umdrehungen an mehreren einzelnen Schrauben. Auch bedarf es keiner Zugänglichkeit zu dem Spannring von der Stirnseite her, d.h. der Platzbedarf für das Kupplungselement ist im wesentlichen auf die Breite des Spannrings beschränkt.

Der bis zur kraftschlüssigen Verspannung notwendige Drehhub hängt auch von der Steigung der Spirale in Umfangsrichtung ab. In jedem Fall aber soll die Steigung so gering sein, daß die Anordnung selbsthemmend ist, d.h. es keiner zusätzlichen Arretierung im verspannten Zustand bedarf.

Das Lösen des Kupplungselements geschieht durch Verdrehen des Sapnnrings in der entgegengesetzten Richtung wie beim Festsetzen. Dabei muß die Selbsthemmung überwunden werden, d.h. ein unter Umständen erhebliches Lösemoment aufgebracht werden.

Im verspannten Zustand liegt der Spannring mit seiner Spiralfläche über einen erheblichen Teil des Umfangs, meist über mehr als 315°, ganzflächig an der Spiralfläche des Büchsenteils an. Die Anlage erfolgt gleichmäßig mit einer relativ geringen Flächenpressung, so daß lokale Uberbeanspruchung des Materials vermieden werden kann.

Eine Anordnung mit zwei in den Zwischenraum zwischen Welle und Ausnehmung eines äußeren Bauteils übereinander angeordneten spiraligen Ringen, die durch eine gegenseitige Verdrehung einen Kraftschluß erzeugen, ist für sich genommen aus der GB-PS 293 122 bekannt. Hierbei handelt es sich jedoch nicht um ein Kupplungselement im Sinne der Erfindung.

Das durch den Kraftschluß des Büchsenteils auf der Welle übertragbare Drehmoment hängt natürlich davon ab, wie fest der Spannring angezogen wird. Um das Drehmoment zu erhöhen, kann es sich gemäß Anspruch 2 empfehlen, auf der Spiralfläche des Büchsenteils (oder mehreren auf diesem angebrachten Spiralflächen) mehrere voneinander unabhängig betätigbare Spannringe nebeneinander anzuordnen.

Diese Spannringe können dann einzeln angezogen werden, wobei das verfügbare, beispielsweise von Hand aufbringbare Anzugsmoment dann mehrfach zur Verfügung steht.

Bei einer ersten in Betracht kommenden Ausführungsform ist mit dem Büchsenteil ein Kupplungsfunktionselement, beispielsweise ein Kupplungsflansch oder ein zum Eingriff in eine Gegenverzahnung bestimmtes verzahntes Teil, verbunden.

Bei einer alternativen Ausführung nach Anspruch 4 sind zwei erfindungsgemäße Kupplungselemente miteinander verbunden und bilden eine eigentliche Kupplung, mittels deren zwei fluchtende oder im wesentlichen fluchtende Wellenenden miteinander drehfest verbunden werden können.

Der Spannring kann lediglich zum Festspannen dienen, indem er am Außenumfang eine Sechskantfläche oder dergleichen aufweist. Gemäß Anspruch 5 ist es aber auch möglich, an dem Spannring im Betrieb über eine entsprechende Einrichtung, z.B. ein Zahn- oder Kettenrand, ein Drehmoment einzuleiten, wobei sich die Verbindung entsprechend dem Drehmoment immer festziehen kann.

Bei allen Ausführungsformen steigt der Radius der Spiralfläche, auf die Achse der Welle bezogen, in Umfangsrichtung winkelproportional an, um dann an einer Stelle auf den ursprünglichen Radius zurückzuspringen. Im allgemeinen wird dies nach etwa 360° der Fall sein, doch sind Ausführungsformen nicht ausgeschlossen, bei denen der Rücksprung, über den Umfang gesehen, mehrfach vorkommt, beispielsweise schon nach 180°.

Bei verspanntem Kupplungselement sind die Stellen des Rücksprungs an der Innenumfangsfläche des äußeren Bauteils und der Außenumfangsfläche der Welle einander nicht mehr benachbart, sondern um den Drehwinkel, den die Anordnung von der Gleitpassung auf der Welle bis zum Festsitz benötigt, voneinander in Umfangsrichtung entfernt.

Zwischen den Übergangsflächen der Innenumfangsfläche des äußeren Bauteils und der Außenumfangsfläche der Welle klafft eine offene Stelle, in die Feuchtigkeit und Luft eindringen können, so daß sich an den Umfangsflächen in diesem Bereich Korrosion bilden kann, insbesondere wenn das Kupplungselement in aggressiver Umgebung eingesetzt ist.

Wenn dann das Kupplungselement gelöst werden soll, werden die beiden durch die Spiralfläche gebildeten Umfangsflächen gegeneinander zurückgedreht, wobei die Kanten der Übergangsflächen auf den korrodierten Bereich der Umfangsflächen gelangen. Dadurch wird das Lösen des Kupplungselements erschwert oder gar unmöglich gemacht. Es kann zu einem Fressen des der Kante benachbarten Bereichs jeder Umfangsfläche auf dem korrodierten Teil der Gegenfläche kommen.

Es besteht somit die weitergehende Aufgabe, ein Kupplungselement der beschriebenen Art so auszugestalten, daß das Lösen nicht mehr in der vorstehend beschriebenen Weise behindert wird.

Diese Aufgabe wird durch die in Anspruch 6 wiedergegebene Gestaltung gelöst.

Es wird also die Spiralfläche in einem gewissen Winkelbereich nach innen bzw. außen verlassen, damit die Kante der Übergangsfläche von dem kleineren Radius der Spiralfläche auf den größeren nicht mehr an der Gegenfläche anliegt, sondern gewissermaßen in der Luft hängt. Beim Zurückdrehen der Bauteile gegeneinander kann die Kante dann nicht mehr auf korrodierte Bereiche der Gegenfläche geraten und durch dort etwa vorhandene Störungen der Oberfläche gebremst werden.

Die Ausnehmungen, mittels deren die Kanten der Übergangsflächen gewissermaßen freigesetzt werden, können nach der Ausgestaltung des Anspruchs 7 zur Achse koaxiale Zylinderflächen sein, die durch Fräsen unter Drehung des Bauteils um die betreffende Achse relativ leicht herstellbar sind.

In der Zeichnung sind Ausführungsbeispiele der Erfindung dargestellt.
Fig. 1 zeigt einen durch die Achse gehenden Längsschnitt durch eine erste Ausführungsform des Kupplungselements nach der Linie I-I in Fig. 2;
Fig. 2 zeigt eine Ansicht gemäß Fig. 1 von links;
Fig. 3 zeigt einen Querschnitt nach der Linie III-III in Fig. 1 in vergrößertem Maßstab;
Fig. 4 zeigt eine andere Ausführungsform des Kupplungselements im Längsschnitt;
Fig. 5 zeigt einen Längsschnitt durch die eigentliche Kupplung mit zwei Kupplungselementen;
Fig. 6 zeigt einen Schnitt nach der Linie VI-VI in Fig. 5;
Fig. 7 und 8 zeigen den Fig. 5 und 6 entsprechende Ansichten einer weiteren Ausführungsform;
Fig. 9 bis 11 zeigen Längsschnitte bzw. Ansichten durch weitere Kupplungen;
Fig. 12 zeigt einen Längsschnitt durch eine weitere Ausführungsform des Kupplungselements;
Fig. 13 zeigt einen Fig. 3 entsprechenden Querschnitt einer abgewandelten Ausführungsform.

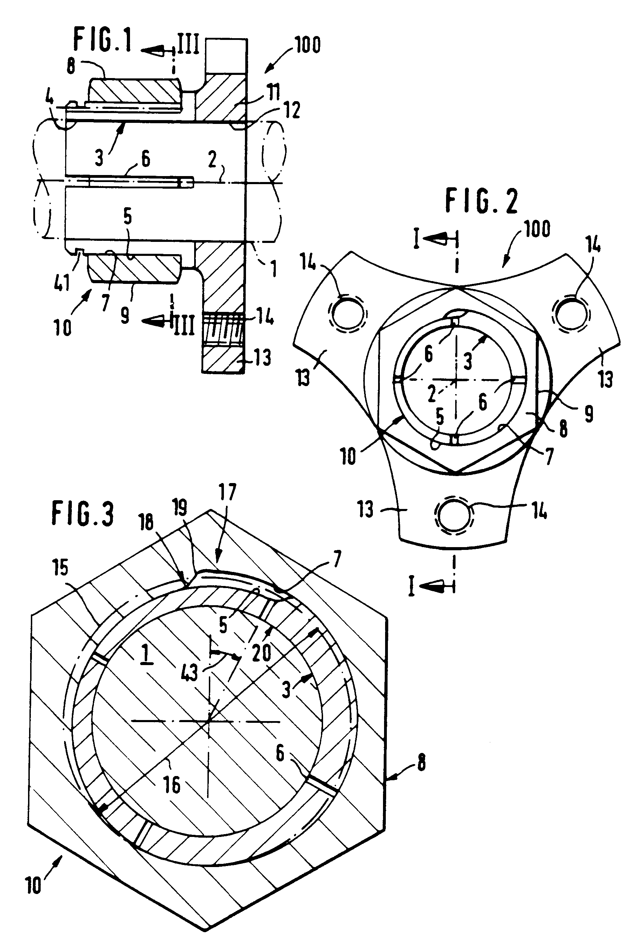

Die in den Fig. 1 und 2 als Ganzes mit 100 bezeichnete Sternscheibe ist zur Kupplung mit einer in Fig. 1 strichpunktiert nur angedeuteten Welle 1 bestimmt. Sie umfaßt eine mit einer auf die Welle 1 passenden Bohrung 12 versehene Flanschscheibe 11 mit drei um 120° versetzten Armen 13, in denen mit Abstand von der Achse 2 Gewindebohrungen 14 angebracht sind, die zur Verbindung mit weiteren Bauteilen, beispielsweise einer elastischen Kupplungsscheibe oder dergleichen dienen.

Mit der Flanschscheibe 11 ist nach Art einer Nabe ein Kupplungselement 10 einstückig verbunden, welches einen Büchsenteil 3 mit einer zylindrischen, mit der Bohrung 12 der Flanschscheibe 11 fluchtenden Innenumfang 4 und einer als Spiralfläche 5 aus zur Achse 2 parallelen Erzeugenden ausgebildeten Außenumfangsfläche besteht, die in vier um 90° in Umfangsrichtung versetzten Stellen bis kurz vor die Flanschscheibe 11 reichende radial durchgehende Längsschlitze 6 aufweist. Auf der Spiralfläche 5 ist mit einer als entsprechende Spiralfläche 7 ausgebildeten Innenumfangsfläche ein in Umfangsrichtung geschlossener Spannring 8 angeordnet, der an seinem Außenumfang eine Sechskant-Schlüsselfläche 9 aufweist.

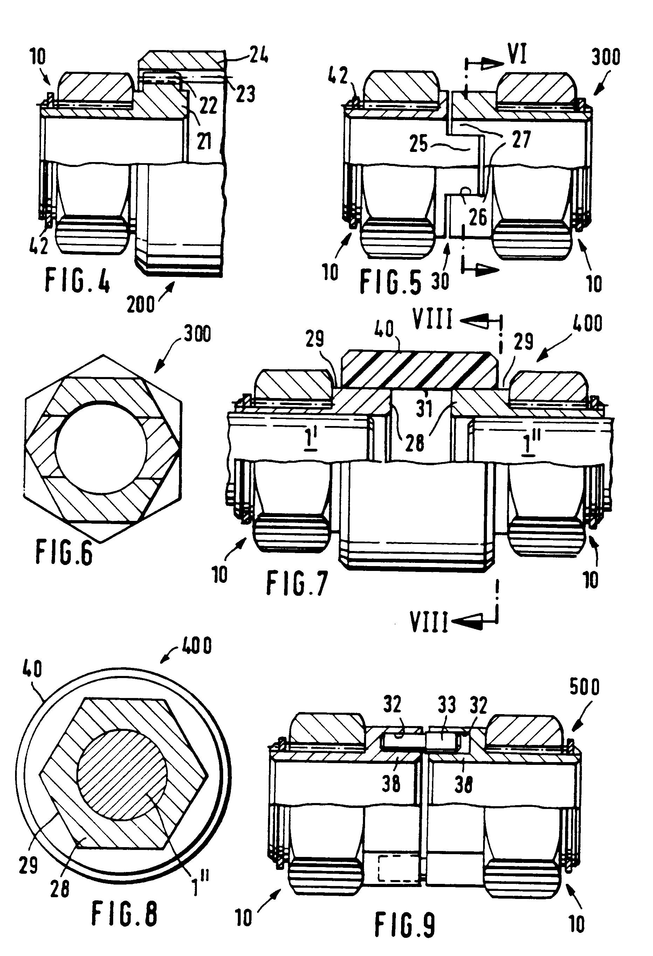

Der Büchsenteil 3 steht nach der der Flansscheibe 11 abgelegenen Seite über den Spannring 8 axial vor und besitzt dort außen eine Umfangsnut 41 zur Aufnahme eines in Fig. 1 weggelassenen Sprengrings 42 (Fig. 4), mit welchem der in unverspanntem Zustand lose Spannring 8 auf dem Büchsenteil 3 festgehalten wird.

Die Ausbildung des Kupplungselements 10 im einzelnen wird anhand der Fig. 3 erläutert. In der Schnittdarstellung ist eine gedachte Zylinderfläche 15 mit einem Durchmesser 16 gestrichelt angedeutet. Die die Innenumfangsfläche des Spannrings 8 bildende Spiralfläche 7 liegt in den ersten beiden Quadranten des Querschnitts außerhalb der gedachten Zylinderfläche 15, in den beiden letzten Quadranten innerhalb derselben. Der örtliche Radius der Spiralfläche 7 und auch der Spiralfläche 5 nimmt von der "12 Uhr"-Stelle 17 gemäß Fig. 3 im Uhrzeigersinn winkelproportional um fast 360° ab und geht von einer Stelle 18 mit dem geringsten Radius in einem engen Übergangsbereich wieder in den größeren Radius an der Stelle 17 über. Der Radiusunterschied zwischen den Stellen 17,18 beträgt bei einem Durchmesser der Welle 1 von 100 mm beispielsweise 2 mm. Durch eine Verdrehung der Spiralflächen 5,7 gegeneinander um einen Winkel 43 von 36° kann also eine Radiustoleranz von 0,2 mm überbrückt werden, was in den meisten Fällen ausreichend ist. Die in Betracht kommenden Abzugs-Drehhübe werden keinesfalls 45° übersteigen müssen.

Die Funktion der Verspannung kann veranschaulicht werden, indem die Stelle 20 des Büchsenteils 3 mit der größten Wandstärke bzw. dem größten Radius der Spiralfläche 5 betrachtet wird. Bei einer Bewegung dieser Stelle bei festgehaltenem Spannring gemäß Fig. 3 im Uhrzeigersinn liegt sie nacheinander an Stellen der Spiralfläche 7 an, die einen immer kleineren Radius aufweisen. Dadurch wird die Stelle 20 radial nach innen gedrückt und auf der Welle 1 kraftschlüssig festgeklemmt.

Die Ausführung der Außenumfangsfläche des Spannrings 8 als sechseckige Schlüsselfläche ist bei dem Ausführungsbeispiel der Fig. 1 bis 3 ebenso wie bei den weiteren Ausführungsbeispielen nur beispielhaft zu sehen. Es ist natürlich auch möglich, andere Gestaltungen zur Erleichterung der Drehmitnahme des Spannrings 8 vorzusehen, z.B. eine zylindrische Außenumfangsfläche mit Ausnehmungen zum Angriff eines Hakenschlüssels.

Soweit in den weiteren Ausführungsbeispielen funktionell gleiche Teile vorhanden sind, sind gleiche Bezugszahlen verwendet.

Bei dem als Ganzes mit 200 bezeichneten Kupplungsglied nach Fig. 4 ist mit dem Kupplungselement 10, welches in der gleichen Weise ausgebildet ist, wie anhand der Fig. 1 bis 3 beschrieben, einstückig ein Stirnzahnrad 21 verbunden, welches mit seiner Verzahnung 22 in eine entsprechende Verzahnung 23 einer Kupplungshülse 24 eingreift.

Bei der als Ganzes mit 300 bezeichneten Kupplung der Fig. 5 und 6 sind zwei Kupplungselemente 10 vorhanden, die auf den einander zugewandten Seiten eine Klauenkupplung 30 aufweisen. Das in Fig. 5 linke Kupplungselement 10 besitzt als Kupplungsfunktionselement am rechten Ende eine Klaue 25, die in eine Ausnehmung 26 zwischen den Gabelschenkeln 27 am in Fig. 5 linken Ende des rechten Kupplungselements 10 eingreift und dadurch eine formschlüssige Drehverbindung herstellt.

Bei der Kupplung 400 der Fig. 7 und 8 besitzen die Kupplungselemente 10 axiale Ansätze 28 mit von der Kreisform abweichender Außenumfangsfläche, z.B. in Gestalt von Sechskantflächen 29, die in eine eine entsprechende Ausnehmung 31 aufweisende Kupplungsbüchse 40 aus einem elastischen Kunststoff von deren beiden Enden her eingreifen. Mittels der Kupplung 400 können die beiden Wellenenden 1′ und 1˝ mit einer Dämpfungswirkung drehverbunden werden.

Bei der Kupplung 500 der Fig. 9 sind wiederum zwei Kupplungselemente 10 vorhanden, die auf entsprechenden Wellenenden festgesetzt werden können und als Kupplungsfunktionselemente axiale Ansätze 38 aufweisen, die einander mit den Stirnseiten gegenüberstehen und darin achsparallele, miteinander fluchtende Bohrungen 32 aufweisen, in denen Stifte sitzen, die die Stoßstelle überbrücken und das Drehmoment übertragen.

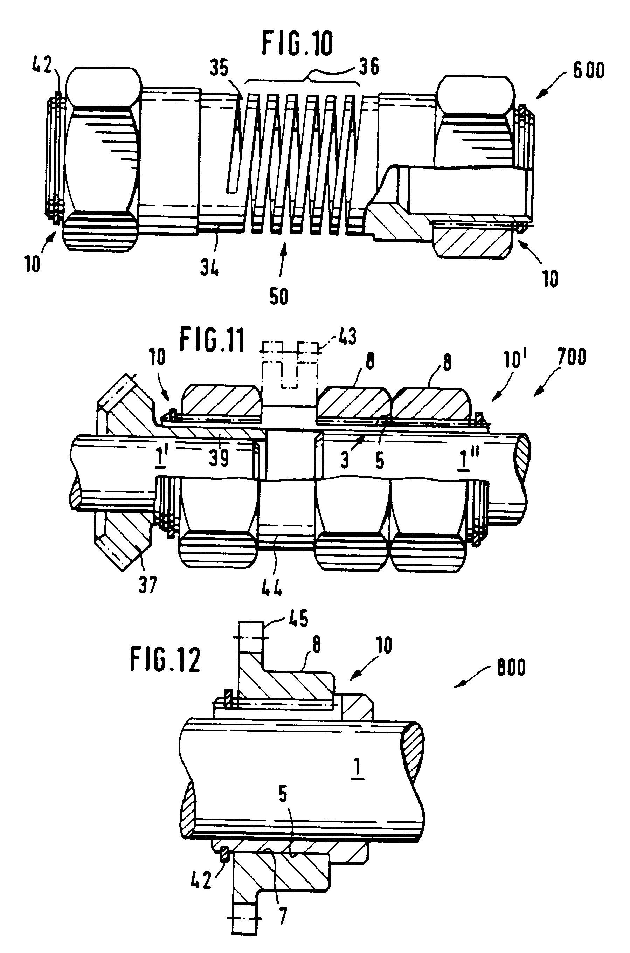

Bei der Kupplung 600 der Fig. 10 sind die Büchsenteile 3 der beiden Kupplungselemente 10 durch einen hohlzylindrischen Verbindungsteil 34 miteinander verbunden, in welchem durch eine entsprechende Ausdrehung 35 eine Spiralfeder 36 ausgebildet ist, die eine Federkupplung 50 zwischen den beiden Kupplungselementen 10 bildet. Mit der Kupplung 600 können gewisse Fluchtfehler der miteinander zu verbindenden Wellenenden ausgeglichen werden.

Auch bei der Kupplung 700 der Fig. 11 ist zwischen den beiden Kupplungselementen 10 und 10′ ein hohlzylindrisches Verbindungsglied 44 vorhanden, welches in diesem Fall allerdings starr ist.

In der gemäß Fig. 11 linken Hälfte ist auf dem Wellenende 1′ ein Kegelrad 37 mit einer dünnwandigen Nabe 39 angeordnet, auf welcher das Kupplungselement 10 sitzt. Beim Anziehen des Kupplungselements 10 wird also einerseits die Kupplung 700 mit dem Kegelrad 37 und andererseits mit dem Wellenende 1′ verbunden.

Auf der rechten Seite der Fig. 11 besitzt das dortige Kupplungselement 10′ auf der gleichen Spiralfläche 5 des Büchsenteils 3 zwei nebeneinander angeordnete Spannringe 8, die beide bis zu einem Grenzdrehmoment angezogen werden können und das an der Umfangsfläche des Wellenendes 1˝ übertragbare Drehmoment zu erhöhen gestattet. In der Mitte der Fig. 11 ist in der oberen Hälfte strichpunktiert angedeutet, daß an dem Verbindungsglied 44 auch ein Drehmoment angreifen kann, beispielsweise indem es als Kettenrad 43 für eine Doppelrollenkette ausgebildet ist.

Bei der Kupplung 700 ist im übrigen auch der Durchmesser des Wellenendes 1˝ größer als der des Wellenendes 1′, was auch bei allen anderen Ausführungsformen der Fall sein kann.

Bei der Ausführungsform 800 der Fig. 12 wird auf der Welle 1 mittels des Kupplungselements 10 ein Kettenrad 45 festgesetzt. Der Spannring 8 des Kupplungselements 10 ist hierbei nicht wie bei den übrigen Ausführungsformen mit Schlüsselflächen versehen, die nur dem anfänglichen Anziehen des Kupplungselements 10 vor dessen eigentlicher Inbetriebnahme, also vor dem Umlauf der Welle 1 dienen, sondern es ist an dem Spannring 8 in diesem Fall das Kettenrad 45 angebracht, über welches im Betrieb, also bei umlaufender Welle 1, ständig Drehmoment in den Spannring 8 eingeleitet wird. Der Spannring 8 ist in diesem Fall gewissermaßen die Nabe des Kettenrades 45. Bei entsprechender Orientierung der Spiralflächen 5,7 relativ zum Drehsinn des Drehmoments wirkt dieses in der Weise, daß die Verbindung immer fester angezogen wird, je höher die Drehmomentbeanspruchung wird. Das anfängliche Anziehen, um überhaupt eine erste zu erhalten, kann von Hand oder auch mit einem Werkzeug vorgenommen werden. Bei der Ausführungsform 800 hat also der Spannring 8 auch im Betrieb des Kupplungselements 10 noch eine Funktion.

Bei der Sternscheibe 100 der Fig. 1 bis 3 sind vier Längsschlitze 6 vorhanden, was nur beispielhaft zu verstehen ist. Die Büchsenteile der anderen Ausführungsformen sind nur an einer Stelle geschlitzt. Wesentlich ist nur, daß die Spiralflächen 5,7 axial im Bereich der Längsschlitze 6 vorhanden sind, damit die Erzeugung der radialen Zusammendrückung in einem besonders leicht verformbaren Bereich stattfindet und keine größeren Kraftverluste eintreten.

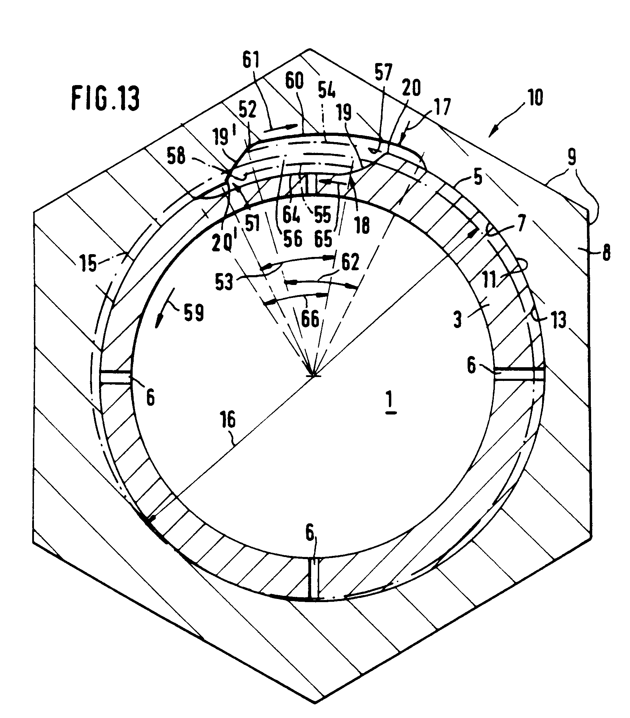

In Fig. 13 ist eine Ausgestaltung der Spiralflächen 5,7 dargestellt, die bei den Kupplungselementen der vorbeschriebenen Ausführungsformen angewandt werden kann.

In der der Fig. 3 entsprechenden Schnittdarstellung der Fig. 13 ist die gedachte Zylinderfläche 15 mit dem Durchmesser 16 gestrichelt angedeutet. Die die Innenumfangsfläche 13 des Spannrings bildende Spiralfläche 7 liegt in den ersten beiden Quadranten des Querschnitts außerhalb der gedachten Zylinderfläche 15, in den beiden letzten Quadranten innerhalb derselben. Der örtliche Radius der Spiralfläche 5 nimmt von einer Stelle 17 des größten Radius gemäß Fig. 2 im Uhrzeigersinn winkelproportional über fast 360° ab und springt an einer Stelle 18 geringsten Radius auf einer Übergangsfläche 19 wieder auf den größten Radius zurück. Die Übergangsfläche 19 geht an einer Stelle 20 in den Bereich großer Wandstärke der Spiralfläche 5 über.

Entsprechendes gilt für die Spiralfläche 7, die die Innenumfangsfläche 13 des Spannrings 8 bildet. Diese geht von einer Stelle 51 geringsten Radius über eine Übergangsfläche 19′ an einer Stelle 52 in den Bereich größten Radius über. An der Stelle 51 ist eine Kante 50′ gebildet.

Von der Ausgangsstellung, in der die Übergangsflächen 19,19′ einander benachbart sind, bis zu der wiedergegebenen Klemmstellung ist ein Winkel 53 von etwa 35° zurückgelegt worden.

Wenn sich die Innenumfangsfläche 13 des Spannrings 8 im Sinne der Spiralfläche 7 zwischen den Übergangsflächen 19,19′ fortsetzte, geschähe dies gemäß der gedachten Fläche 54. Die Fortsetzung der Spiralfläche 5 erfolgte nach der gedachten Fläche 55. Der Bereich 56 zwischen den Übergangsflächen 19 und 19′ ist bei angezogener Spannanordnung 10 offen, d.h. es kann von außen Feuchtigkeit und korrodierende Atmosphäre eindringen. Eine entlang der gedachten Fläche 54 fortgeführte Innenumfangsfläche 13 wäre unter Umständen in dem Bereich 57 korrodiert, eine entlang der Fläche 55 fortgeführte Außenumfangsfläche 11 in dem Bereich 58. Wenn dann die Spannanordnung gelöst werden sollte, was eine Rückdrehung des Büchsenteils 3 gegenüber dem festgehaltenen Spannring 8 im Sinne des Pfeiles 59 bedeutete, würden die Kanten 20,20′ auf die korrodierten Zonen 57 und 58 treffen, was ein Freischaben dieser Stellen von den Korrosionsprodukten erforderte oder aber ein Hinaufrutschen der Kanten 20,20′ auf die Korrosionsprodukte, was zu einem Verklemmen der Anordnung führte und das Lösen unmöglich machte.

Tatsächlich aber weist die Innenumfangsfläche 13 des Spannrings 8 von der Übergangsfläche 19′ ausgehend eine außerhalb der gedachten Fortsetzung 54 der Spiralfläche 7 gelegene Ausnehmung 60 auf. Die Ausnehmung 60 wird durch eine zur Achse 2 konzentrische Zylinderfläche gebildet, die sich mit Abstand außerhalb der gedachten Fläche 54 von der Übergangsfläche 19′ bzw. der Stelle 52 im Sinne der bei einem Lösen der Spannanordnung erfolgenden Verlagerung 61 gegenüber dem Büchsenteil 3 anschließt und sich über einen Winkelbereich 62 erstreckt, der dem beim Verspannen maximal vorkommenden Verdrehwinkel der Teile 3 und 8 gegeneinander entspricht, also etwa 45°. Entsprechend schließt sich an die Übergangsfläche 19 bzw. die Stelle 18 eine radial innerhalb der gedachten Fortsetzung 55 der Spiralfläche 5 eine Ausnehmung 64 an, die sich von der Stelle 18 ausgehend im Sinne der Richtung 65, in der der Büchsenteil 3 gegenüber dem festgehaltenen Spannring 8 beim Lösen zu verdrehen wäre, über einen Winkel 66 erstreckt, der dem maximal vorkommenden Festspannwinkel entspricht.

Auf diese Weise sind die beiden Kanten 20,20′ in der aus der Zeichnung ersichtlichen Weise freigesetzt und brauchen beim Lösen der Spannanordnung keine Widerstände in Gestalt von korrodierter Materialoberfläche zu überwinden.

Die radiale Erstreckung der Ausnehmungen 60,64 ist in der Zeichnung übertrieben dargestellt. Ein Betrag von 0,5 bis 1 mm radialer Freisetzung ist in der Praxis ausreichend.

## Patentansprüche

1. Kupplungselement zum kraftschlüssigen Verbinden eines äußeren Bauteils mit einer Welle (1,1′,1˝),
mit einem mit der Innenumfangsfläche (4) zur Anordnung auf der Welle (1,1′,1˝) bestimmten Büchsenteil (3), der auf mindestens einem Teil seiner Länge an mindestens einer Stelle, in Umfangsrichtung gesehen, einen Längsschlitz (6) aufweist,
und mit einem in Höhe des Längsachlitzes (6) auf dem Büchsenteil (3) angeordneten, drehbaren, in Umfangsrichtung ungeteilten Spannring (8), dessen Innenumfangsfläche mit der Außenumfangsfläche des Büchsenteils (3) zusammenwirkt, wodurch beim Drehen des Spannrings (8) der Büchsenteil (3) radial zusammendrückbar und auf der welle (1,1′,1˝) kraftschlüssig festspannbar ist,
dadurch gekennzeichnet,
daß auf der Außenumfangsfläche des Büchsenteils (3) axial in Höhe des Längsschlitzes (6) eine Spiralfläche (5) angeordnet ist, die mit dem Büchsenteil (3) verbunden, zur Achse (2) der Innenumfangsfläche (4) des Büchsenteils (3) koaxial und aus zu der Achse (2) parallelen Erzeugenden gebildet ist sowie in Umfangsrichtung eine im Selbsthemmungsbereich liegende Steigung aufweist
und daß die Innenumfangsfläche des Spannrings (8) eine der Spiralfläche (5) der Büchsenteils (3) entsprechende Spiralfräche (7) ist.

2. Kupplungselement nach Anspruch 1, dadurch gekennzeichnet, daß auf dem Büchsenteil (3) mehrere voneinander unabhängig betätigbare Spannringe (8,8) nebeneinander angeordnet sind.

3. Kupplungselement nach Anspruch 1 oder 2, dadurch gekennzeichnet, daß mit dem Büchsenteil (3) ein Kupplungsfunktionselement (11;21;25,27;28;38,34;44) verbunden ist.

4. Kupplungselement nach einem der Ansprüche 1 bis 3, dadurch gekennzeichnet, daß zur Verbindung von Wellenenden (1′,1˝) mit dem Kupplungselement (10) über Kupplungsglieder (25,27;40;33;50;44) ein weiteres gleich ausgebildetes und koaxial angeordnetes Kupplungselement (10) verbunden ist.

5. Kupplungselement nach einem der Ansprüche 1 bis 4, dadurch gekennzeichnet, daß an dem Spannring (8) eine Einrichtung (45) zur Einleitung eines Drehmoments im Betrieb vorgesehen ist.

6. Kupplungselement nach einem der Ansprüche 1 bis 5, dadurch gekennzeichnet, daß von den Stellen (18,52) des Übergangs der Umfangsflächen (11,13) von dem jeweils größeren Radius auf den benachbarten kleineren Radius an in Löserichtung (61,65) in einem dem maximalen Verdrehwinkel entsprechenden Winkelbereich (62,66) die Umfangsflächen (11 bzw. 13) radial innerhalb bzw. außerhalb der gedachten Fortsetzungen (54,55) der Spiralflächen (5,7) gelegene Ausnehmungen (64,60) aufweisen.

7. Kupplungselement nach Anspruch 6, dadurch gekennzeichnet, daß die Ausnehmungen (60,64) Zylinderflächen mit der gemeinsamen Achse (2) entsprechender Achse, jedoch unterschiedlichem Radius sind.

## Claims

1. Coupling element for frictionally connecting an external component to a shaft (1, 1′, 1˝),
having a sleeve portion (3) with its internal surface (4) designed for mounting on the shaft (1, 1′, 1˝) and having a longitudinal slit (6) on at least a part of its length at at least one point, looked at in a circumferential direction,
and having a rotatable circumferentially unslit clamping ring (8) arranged on the sleeve portion (3) at the height of the longitudinal slit (6), its internal peripheral surface co-operating with the external peripheral surface of the sleeve portion (3) whereby on rotation of the clamping ring (8) the sleeve portion (3) is radially compressed and is frictionally clamped onto the shaft (1, 1′, 1˝),
characterised in that
a spiral surface (5) is arranged on the external peripheral surface of the sleeve portion (3) axially at the height of the longitudinal slit (6), connected to the sleeve portion (3), co-axial with the axis (2) of the internal peripheral surface of the sleeve portion (3) and formed by a generator parallel to the axis (2), as well as having a circumferential inclination lying in the self-jamming range
and that the inner peripheral surface of the clamping ring (8) is a spiral surface (7) corresponding to the spiral surface (5) of the sleeve portion (3).

2. Coupling element according to claim 1, characterised in that a number of mutually independently operable clamping rings (8,8) are arranged side-by-side on the sleeve portion (3).

3. Coupling element according to claim 1 or 2, characterised in that an element (11; 21; 25, 27; 28; 38, 34; 44) having a coupling or clutching function is connected to the sleeve portion 3.

4. Coupling element according to one of claims 1 to 3, characterised in that a further coupling element (10) which is of the same form and is arranged co-axially is connected to the coupling element (10) through coupling members (25, 27; 40; 33; 50; 44) for joining shaft ends (1′, 1˝).

5. Coupling element according to one of claims 1 to 4, characterised in that a device (45) for applying a torque in operation is provided on the clamping ring (8).

6. Coupling element according to one of claims 1 to 5, characterised in that from the points (18, 52) of the transition of the circumferential surface (11, 13, from the currently maximum radius to the adjacent smaller radius in the releasing direction (61, 65) and over an angular range (62, 66) corresponding to the maximum angle of rotation, the peripheral surfaces (11 and 13) have recesses (64, 60) disposed radially within and without the notional continuations (54, 55) of the spiral surfaces (5, 7).

7. Coupling element according to claim 6, characterised in that the recesses (60, 64) are cylindrical surfaces having axes corresponding to the common axis (2) but of different radius.

## Revendications

1. Elément d'accouplement pour l'assemblage par liaison par la force d'un élément constitutif extérieur avec un arbre (1, 1′, 1˝)
- avec un élément de douille (3) prévu pour être disposé sur l'arbre (1, 1′, 1˝) avec sa surface périphérique interne (4), et qui sur au moins une partie de sa longueur, et au moins à un emplacement en direction préiphérique, comporte une fente longitudinale (6),
- et avec un anneau de serrage (8) non divisé en direction périphérique, disposé sur l'élément de douille (3) au niveau de la fente longitudinale (6) et susceptible de tourner, anneau dont la surface périphérique interne coopère avec la surface périphérique externe de l'élément de douille (3), grâce à quoi lors de la rotation de l'anneau de serrage (8), l'élément de douille (3) est susceptible d'être comprimé radialement et d'être bloqué sur l'arbre (1, 1′, 1˝) par liaison de force,
élément d'accouplement caractérisé
- en ce que sur la surface périphérique externe de l'élément de douille (3) est agencée axialement au niveau de la fente longitudinale (6), une surface spirale (5) qui, reliée à l'élément de douille (3), est co-axiale à l'axe 2 de la surface périphérique interne (4) de l'élément de douille (3) et est constituée de génératrices parallèles à l'axe (2), tandis qu'en direction périphérique elle comporte une pente se situant dans la zone de l'autoblocage,
- et en ce que la surface périphérique interne de l'anneau de serrage (8) est une surface spirale (7) correspondant à la surface spirale (5) de l'élément de douille (3).

2. Elément d'accouplement selon la revendication 1, caractérisé en ce que sur l'élément de douille (3) sont disposés les uns à côté des autres, plusieurs anneaux d'arrêt (8, 8) susceptibles d'être actionnés indépendamment les uns des autres.

3. Elément d'accouplement selon la revendication 1 ou la revendication 2, caractérisé en ce qu'avec l'élément de douille (3) est assemblé un élément fonctionnel d'accouplement (11, 21 ; 25, 27 ; 28 ; 38, 34 ; 44).

4. Elément d'accouplement selon une des revendications 1 à 3, caractérisé en ce que pour l'assemblage des extrémités d'arbres (1′, 1˝) avec l'élément d'accouplement (10), un autre élément d'accouplement (10) de constitution identique et disposé co-axialement est relié par l'intermédiaire d'organes d'accouplement (11, 27 ; 40 ; 33 ; 50 ; 44).

5. Elément d'accouplement selon une des revendications 1 à 4, caractérisé en ce que sur l'anneau de serrage (8) est prévu un dispositif (45) pour l'introduction d'un couple en fonctionnement.

6. Elément d'accouplement selon une des revendications 1 à 5, caractérisé en ce qu'à partir des positions (18, 52) des transitions des surfaces périphériques (11, 13) du rayon respectivement le plus grand sur le rayon voisin le plus petit dans le sens du desserrage (61, 65) dans une zone angulaire (62, 66) correspondant à l'angle maximal de rotation, les surfaces périphériques (11 ou bien 13) comportent des évidements (64, 60) placés radialement à l'intérieur ou bien à l'extérieur des prolongements imaginaires (54, 55) des surfaces spirales (5, 7).

7. Elément d'accouplement selon la revendication 6 caractérisé en ce que les évidements (60, 64) sont des surfaces cylindriques d'axes correspondants avec l'axe commun (2) et avec, cependant, un rayon différent.
